# EUROPÄISCHE PATENTSCHRIFT

(11) **EP 4 388 224 B1**
(45) Veröffentlichungstag und Bekanntmachung des Hinweises auf die Patenterteilung: **04.02.2026**
(21) Anmeldenummer: 22760943.5
(22) Anmeldetag: 03.08.2022
(51) Int. Cl.: F16G 13/16

(54) **HALTEVORRICHTUNG FÜR EINE LEITUNGSFÜHRUNGSEINRICHTUNG, INSBESONDERE ENERGIEFÜHRUNGSKETTE, SOWIE ANORDNUNG HIERMIT**
HOLDING APPARATUS FOR A LINE-GUIDING DEVICE, IN PARTICULAR A CABLE CARRIER, AND ARRANGEMENT THEREWITH
DISPOSITIF DE RETENUE POUR UN DISPOSITIF DE GUIDAGE DE CÂBLE, EN PARTICULIER UNE CHAÎNE PORTE-CÂBLES ET AGENCEMENT CORRESPONDANT

(30) Priorität: 20.08.2021 DE 202021104498 U
(43) Veröffentlichungstag der Anmeldung: 26.06.2024
(73) Patentinhaber: igus SE & Co. KG, 51147 Köln (DE)
(72) Erfinder: LAPIERE, Karl Oskar, 53844 Troisdorf (DE); DIEHL, Theo, 64354 Reinheim-Ueberau (DE)
(74) Vertreter: Lippert Stachow Patentanwälte Rechtsanwälte
(86) Internationale Anmeldenummer: PCT/EP2022/071861
(87) Internationale Veröffentlichungsnummer: WO 2023/020844

(56) Entgegenhaltungen:
- DE-U1- 202007 005 478
- KR-A- 20030 065 158
- KR-B1- 102 272 052
- US-A- 3 994 373
- US-A- 4 129 277

## Beschreibung

Die Erfindung betrifft eine Haltevorrichtung für eine Leitungsführungseinrichtung. Diese Leitungsführungseinrichtung erstreckt sich zwischen zwei relativ zueinander beweglichen Anschlussstellen und umfasst ein mit einer der Anschlussstellen verbindbares Trum und ein mit der anderen Anschlussstelle verbindbares Trum sowie einen die Trume verbindenden Umlenkbogen. Die Haltevorrichtung weist mindestens eine Halteeinrichtung, die zwischen einer ersten Position und einer zweiten Position verlagerbar ist, und eine Schalteinrichtung, mittels der diese Verlagerung bewirkbar ist, auf.

Mit dem Begriff "Verlagern" ist vorliegend insbesondere ein Bewegen von einer Stelle an eine andere Stelle gemeint, wobei es auf die Art der Bewegung nicht ankommt. Das Verlagern kann z.B. durch eine Schwenk- bzw. Drehbewegung, translatorische Bewegung oder auch eine kombiniert translatorisch-rotatorische Bewegung erfolgen.

Die Haltevorrichtung weist zudem eine Halterung für die Halteeinrichtung auf.

Die Leitungsführungseinrichtung kann als Energieführungskette ausgebildet sein. Bei der durch eine solche Haltevorrichtung zu haltende Leitungsführungseinrichtung kann es sich genauer gesagt zum Beispiel um eine Energieführungskette zur Aufnahme von Kabeln, Schläuchen oder biegsamen Rohren handeln, bei der benachbarte Glieder gelenkig miteinander verbunden sind, Bandketten, bei denen Glieder über ein biegsames Band miteinander verbunden sind oder andere in mindestens einer Ebene abwinkelbare Einrichtungen zur Aufnahme von Leitungen.

Die Erfindung betrifft auch eine Anordnung mit einer derartigen Haltevorrichtung und einer Leitungsführungseinrichtung.

Derartige Haltevorrichtungen und Anordnungen sind, beispielsweise aus der DE 23 62 463 A1, DE202007005478U1, US3994373A, KR20030065158A, US4129277A und KR102272052B1, bereits bekannt. Sie werden bei längeren Verfahrwegen zum Beispiel in horizontaler Richtung eingesetzt.

Nachteilig an bekannten Haltevorrichtungen und Anordnungen ist, dass sie aufwendig herstellbar und fehleranfällig sein können und die Leitungsführungseinrichtung in höherem Maße beanspruchen können, als dies wünschenswert wäre.

Die Erfindung hat es sich daher zur Aufgabe gemacht, eine derartige Haltevorrichtung und Anordnung zu schaffen, welche zumindest hinsichtlich eines der genannten Nachteile verbessert sind.

Diese Aufgabe wird durch die in Anspruch 1 wiedergegebene Haltevorrichtung und die in Anspruch 13 wiedergegebene Anordnung gelöst.

Bei der erfindungsgemäßen Haltevorrichtung sind die Halteeinrichtung und die Schalteinrichtung an einem - bevorzugt genau einem - um eine Drehachse drehbar an der Halterung gelagerten Wippelement angeordnet. Das Wippelement weist einen ersten Schenkel und einen zweiten Schenkel auf. Der zweite Schenkel ist in Längsrichtung der Drehachse zu dem ersten Schenkel versetzt angeordnet.

Durch das derartige Wippelement ist eine Voraussetzung für eine einfach herstellbare und zuverlässige Haltevorrichtung geschaffen.

Der zweite Schenkel und der erste Schenkel sind aufgrund ihrer versetzten Anordnung bevorzugt nicht auf der gleichen Höhe der Drehachse angeordnet. In einer bevorzugten Ausführungsform erstreckt sich der zweite Schenkel zumindest auch über einen anderen Abschnitt der Drehachse als der erste Schenkel. Somit erstrecken sich der erste und der zweite Schenkel über einen gemeinsamen Abschnitt der Drehachse, wobei dieser gemeinsame Abschnitt kürzer als die Hälfte oder 1/4 oder 1/10 der längsten Erstreckung des ersten und/oder des zweiten Schenkels in Richtung der Drehachse sein kann. Bei einer alternativen Ausführungsform erstrecken sich der erste und der zweite Schenkel nicht über einen gemeinsamen Abschnitt der Drehachse. Mit Ausnahme eines etwaigen Bereichs, in dem sich der erste Schenkel und der zweite Schenkel über einen gemeinsamen Abschnitt der Drehachse erstrecken, belässt jeder Schenkel bevorzugt im Bereich der Drehachse, über den sich der jeweils andere Schenkel erstreckt, einen Freiraum. In der Ausführungsform, in der sich der erste und der zweite Schenkel nicht über einen gemeinsamen Abschnitt der Drehachse erstrecken, können sie in Richtung der Drehachse aneinander angrenzen oder einen Abstand zueinander aufweisen. Der Abstand kann insbesondere bei schnell laufenden Leitungsführungseinrichtungen eine rechtzeitige Verlagerung der Halteeinrichtung von ihrer zweiten Position in ihre erste Position und damit eine störungsfreie Durchführung des Umlenkbogens gewährleisten. Der Abstand ist bevorzugt kleiner als die zehnfache größte Erstreckung des ersten Schenkels in Richtung der Längsachse.

Der erste Schenkel kann auch als Schaltschenkel bezeichnet werden.

Der zweite Schenkel kann bevorzugt auch als Halteschenkel bezeichnet werden.

Bevorzugt umfasst die Halteeinrichtung den zweiten Schenkel oder ist hierdurch gebildet bzw. der zweite Schenkel bildet die Halteeinrichtung.

Bevorzugt umfasst die Schalteinrichtung den ersten Schenkel oder ist hierdurch gebildet.

Die Leitungsführungseinrichtung bzw. der Umlenkbogen der Leitungsführungseinrichtung ist bevorzugt verfahrbar.

Die Haltevorrichtung ist bevorzugt dazu eingerichtet, ein Trum der Leitungsführungseinrichtung vorübergehend so zu halten, dass keine Relativbewegung zwischen diesem Trum und der Haltevorrichtung möglich ist.

Alternativ kann die Haltevorrichtung dazu eingerichtet sein, ein Trum der Leitungsführungseinrichtung vorübergehend so zu halten, dass sich dieses auf oder an der Haltevorrichtung entlang bewegt. Insbesondere in dieser Alternative kann die Haltevorrichtung auch als Führungsvorrichtung bezeichnet werden.

Bevorzugt ist die Halteeinrichtung zwischen der ersten Position und der zweiten Position durch Drehen um die Drehachse verlagerbar, bevorzugt um mindestens 45° und insbesondere um mindestens 80° und insbesondere um mindestens 90° und vorzugsweise um weniger als 180° und insbesondere um weniger als 100°. Bevorzugt ist die Halteeinrichtung zwischen der ersten Position und der zweiten Position um ca. 90° drehbar.

Mit dem Begriff "Wippelement" wird vorliegend insbesondere jedes Element bezeichnet, das dazu eingerichtet ist, einander abwechselnde - bevorzugt betragsmäßig gleichgroße - Drehbewegungen in gegensinnige Drehrichtungen auszuüben.

Bevorzugt ist das Wippelement um mindestens 45° und insbesondere um mindestens 80° und insbesondere um mindestens 90° drehbar gelagert und vorzugsweise um weniger als 180° und insbesondere um weniger als 100°. Bevorzugt ist das Wippelement um ca. 90° drehbar gelagert.

Die die Halteeinrichtung von ihrer ersten Position in die zweite Position verlagernde Drehung des Wippelements ist bevorzugt gegensinnig und betragsmäßig gleich groß zur die Halteeinrichtung von ihrer zweiten Position in die erste Position verlagernde Drehung des Wippelements.

Bevorzugt ist das Halteelement von der ersten Position in die zweite Position durch Kontakt des Wippelements mit der Leitungsführungseinrichtung verlagerbar. Bevorzugt ist das Halteelement von der zweiten Position in die erste Position mittels Gewichtskraft des Wippelements zurückverlagerbar.

Bevorzugt ist die Schalteinrichtung durch die Leitungsführungseinrichtung, vorzugsweise den Umlenkbogen der Leitungsführungseinrichtung, betätigbar. Bevorzugt ist durch die Betätigung der Schalteinrichtung, bevorzugt durch die Leitungsführungseinrichtung, die Halteeinrichtung von einer ihrer Positionen, bevorzugt die erste Position, in die jeweils andere Position, bevorzugt die zweite Position, verlagerbar.

Bevorzugt ist die zweite Position der Halteeinrichtung eine Halte- und/oder Stützposition, in der mittels der Halteeinrichtung ein Trum der Leitungsführungseinrichtung haltbar bzw. von unten abstützbar ist. Die Halteeinrichtung kann insbesondere das Obertrum der Leitungsführungseinrichtung abstützen. Bevorzugt ist der Umlenkbogen der Leitungsführungseinrichtung nicht durch die Haltevorrichtung durchführbar, solange die Halteeinrichtung in der zweiten Position ist. Bevorzugt ist die erste Position der Halteeinrichtung eine Ausweichposition, in der mittels der Halteeinrichtung ein Trum der Leitungsführungseinrichtung nicht haltbar bzw. das Obertrum nicht von unten abstützbar ist. Bevorzugt ist der Umlenkbogen der Leitungsführungseinrichtung durch die Haltevorrichtung durchführbar, solange die Halteeinrichtung in der ersten Position ist. Bevorzugt ist die Halteeinrichtung in der ersten Position berührungslos von dem Umlenkbogen der Leitungsführungseinrichtung passierbar.

Bevorzugt sind die Schenkel des Wippelements zueinander abgewinkelt, insbesondere um ca. 90°.

Vorzugsweise sind die Schenkel relativ zueinander unverlagerbar bzw. das Wippelement so gestaltet, dass die Schenkel in einen festen, unveränderlichen Winkel zueinander liegen bzw. abgewinkelt sind. Dies ist das Wippelement bevorzugt einstückig ausgebildet.

Das Wippelement ist vorzugsweise und zumindest in Bezug auf die Relativlage der Schenkel in sich torsionssteif ausgeführt bzw. gestaltet, insbesondere in Bezug auf die Drehachse.

Bevorzugt umfasst die Halteeinrichtung eine - bevorzugt ebene - Haltefläche des zweiten Schenkels zur Kontaktierung der Leitungsführungseinrichtung.

Die Haltefläche des zweiten Schenkels kann parallel zu dem zweiten Schenkel verlaufen und/oder durch den zweiten Schenkel gebildet sein. Bevorzugt ist die Haltefläche des zweiten Schenkels als Haftreibungsfläche ausgebildet. Bevorzugt weist die Haltefläche des zweiten Schenkels bzw. die Halteeinrichtung keine Rollen auf. Bevorzugt ist die Haltefläche des zweiten Schenkels als Obertrumkontaktfläche und weiter bevorzugt als Obertrumauflagefläche ausgebildet. Durch die ebene Haltefläche des zweiten Schenkels können bevorzugt Haltekräfte flächig in die Leitungsführungseinrichtung einleitbar sein. Durch die ebene Haltefläche des zweiten Schenkels können weiter bevorzugt die Gewichtskraft des Obertrums oder Teile der Gewichtskraft des Obertrum flächenförmig aufgenommen werden. Eine punkt- oder linienförmige Belastung der Leitungsführungseinrichtung mit Haltekräften kann bevorzugt vermieden werden.

Bevorzugt weist jedes Trum der Leitungsführungseinrichtung einen zumindest in etwa rechteckigen Querschnitt mit einer Höhe und einer Breite auf. Bevorzugt ist die Breite größer als die Höhe. Bevorzugt weist die Leitungsführungseinrichtung eine Außenfläche auf. Mit dem Begriff "Außenfläche" ist vorliegend insbesondere die Fläche der beiden Trume der Leitungsführungseinrichtung gemeint, die von dem jeweils anderen Trum weg gewandt ist, sowie die diese Flächen verbindende Fläche im Bereich des Umlenkbogens. Bevorzugt weist die Leitungsführungseinrichtung zwei gegenüberliegende Seitenflächen auf, die weiter bevorzugt jeweils an die Außenfläche angrenzen. Bevorzugt verläuft jede Seitenfläche auch im Bereich des Umlenkbogens in einer einzigen Ebene. Bevorzugt weist die Leitungsführungseinrichtung eine Innenfläche auf. Hiermit ist vorliegend insbesondere die der zugehörigen Außenfläche gegenüberliegende Fläche eines Trumes oder des Umlenkbogens gemeint. Bevorzugt bildet die Leitungsführungseinrichtung zwischen jeder Seitenfläche und der Außenfläche jeweils eine Kante aus.

Bevorzugt ist die Halteeinrichtung in ihre zweite Position verlagerbar, indem sich der zweite Schenkel des Wippelements, genauer gesagt die Haltefläche der Halteeinrichtung, an die Innenfläche der Leitungsführungseinrichtung im Bereich eines Trumes anlegt und dieses Trum auf diese Weise hält.

Bevorzugt umfasst die Schalteinrichtung eine Schaltkante oder eine Schaltfläche zur Kontaktierung der Leitungsführungseinrichtung, wobei diese Schaltkante oder Schaltfläche insbesondere am ersten Schenkel vorgesehen ist.

Die Schaltkante bzw. Schaltfläche kann dazu ausgebildet sein, eine - bevorzugt genau eine - Kante der Leitungsführungseinrichtung, insbesondere zwischen einer Seitenfläche und einer Außenfläche der Leitungsführungseinrichtung, und insbesondere im Bereich des Umlenkbogens, zu kontaktieren.

Die Schaltkante bzw. Schaltfläche kann alternativ oder zusätzlich dazu ausgebildet sein, die Außenfläche der Leitungsführungseinrichtung insbesondere im Bereich des Umlenkbogens zu kontaktieren.

Die Schaltkante bzw. Schaltfläche kann alternativ oder zusätzlich dazu ausgebildet sein, eine - bevorzugt genau eine - Seitenfläche der Leitungsführungseinrichtung insbesondere im Bereich des Umlenkbogens zu kontaktieren.

Die Schaltkante bzw. Schaltfläche wirkt bevorzugt nicht ausschließlich mit der Seitenfläche der Leitungsführungseinrichtung zusammen.

Bevorzugt weisen der erste Schenkel und der zweite Schenkel ein freies Ende auf.

Bevorzugt ist die Schaltkante bzw. die Schaltfläche an dem freien Ende des ersten Schenkels angeordnet oder hiervon gebildet. Bevorzugt verläuft die Schaltkante bzw. Schaltfläche schräg zur Drehachse und/oder gekrümmt, vorzugsweise derart, dass ihr Abstand zur Drehachse in entlang der Drehachse und von der Halteeinrichtung weg weisenden Richtung zunimmt.

Bevorzugt wird hierdurch erreicht, dass die Schaltkante bzw. die Schaltfläche in der Richtung, die der Bewegungsrichtung der sich der Halteeinrichtung nähernden Leitungsführungseinrichtung entspricht, in zunehmendem Maße in den Verfahrweg der Leitungsführungseinrichtung hineinragt.

Die Schaltfläche kann in sich - bevorzugt um ca. 90° oder ca. 45° - verdreht sein. Bevorzugt kann hierdurch die Rotationslage des in Kontakt mit einer Kante und/oder der Außenfläche und/oder einer Seitenfläche der Leitungsführungseinrichtung stehenden Bereichs der Schaltfläche relativ zu der Leitungsführungseinrichtung während des die Halteeinrichtung von ihrer ersten Position in die zweite Position verlagernden Drehens des Wippelements beibehalten werden. Die In-sich Verdrehung der Schaltfläche ist bevorzugt so ausgeführt, dass sie eine Drehung des Wippelements, die durch das Schaltelement in Zusammenwirken mit der Leitungsführungseinrichtung bewirkt wird, im Kontaktbereich zwischen einer Kante und/oder der Außenfläche und/oder einer Seitenfläche der Leitungsführungseinrichtung und der Schaltfläche zumindest teilweise kompensiert.

Bevorzugt ist das Wippelement dreharretierbar. Zur Bewirkung der Dreharretierung kann die Schalteinrichtung auch als Dreharretierungsvorrichtung ausgeführt sein, derart, dass sie nicht nur die Verlagerung der Halteeinrichtung zwischen der ersten Position und der zweiten Position bewirkt, sondern auch die Beibehaltung zumindest einer dieser Positionen, insbesondere der zweiten Position.

Alternativ oder zusätzlich kann die Haltevorrichtung zur Bewirkung der Dreharretierung eine Dreharretierungsvorrichtung aufweisen, die von der Schalteinrichtung verschieden sein kann oder die zumindest Bereiche aufweisen kann, die von der Schalteinrichtung verschieden sind.

Bevorzugt ist das Wippelement mittels einer - von der Schalteinrichtung vorzugsweise zumindest bereichsweise verschiedenen - Dreharretierungsvorrichtung dreharretierbar.

Bevorzugt ist die Dreharretierungsvorrichtung aktivierbar und deaktivierbar, vorzugsweise durch die Leitungsführungseinrichtung.

Das Wippelement ist bevorzugt so ausgeführt, dass nach einer die Halteeinrichtung von ihrer ersten Position in die zweite Position verlagernde Drehung des Wippelements die Halteeinrichtung in ihrer zweiten Position verbleibt, solange die Dreharretierungsvorrichtung - bevorzugt durch Kontakt mit der Leitungsführungseinrichtung - aktiviert ist.

Das Wippelement ist bevorzugt so ausgeführt, dass bei Deaktivierung der Dreharretierungsvorrichtung die Halteeinrichtung - bevorzugt durch entsprechende Drehung des Wippelement - in ihre erste Position zurückverlagerbar ist.

Das Wippelement ist bevorzugt so ausgeführt, dass immer dann, wenn die Dreharretierungsvorrichtung deaktiviert ist, sich die Halteeinrichtung in ihrer ersten Position befindet.

Bevorzugt wirken jedenfalls dann, wenn die Halteeinrichtung in ihrer zweiten Position ist und eine Leitungsführungseinrichtung hält, Kräfte zwischen der Halteeinrichtung und der Dreharretierungsvorrichtung. Diese Kräfte wirken bevorzugt in dem Wippelement. Bevorzugt bewirken diese Kräfte ausschließlich oder in überwiegendem Maße eine Torsionsbeanspruchung des Wippelements. Bevorzugt ist das Wippelement dazu eingerichtet, durch das Halten einer Leitungsführungseinrichtung hervorgerufene Kräfte im Wege einer Torsionsbeanspruchung aufzunehmen. Hierdurch ist eine Voraussetzung dafür geschaffen, dass diese Kräfte, wie bevorzugt, von dem Wippelement bei geringerem Material- und Herstellungsaufwand des Wippelements aufgenommen werden können, als dies dann der Fall wäre, wenn diese Kräfte ausschließlich oder in überwiegendem Maße eine Biegebeanspruchung des Wippelements bewirken würden.

Bevorzugt dient die Dreharretierungsvorrichtung zur Verhinderung einer Drehung des Wippelements bei von der Halteeinrichtung gehaltener Leitungsführungseinrichtung, solange der Umlenkbogen nicht durchgeführt wird. Die Dreharretierungsvorrichtung nimmt bevorzugt eine Reaktionskraft zu der auf die Leitungsführungseinrichtung von der Haltevorrichtung ausgeübte Halte- und/oder Stützkraft, auf. Beispielsweise nimmt die Dreharretierungsvorrichtung die Gewichtskraft des Obertrums auf.

Bevorzugt umfasst die Dreharretierungsvorrichtung eine Arretierungsfläche. Die Arretierungsfläche dient bevorzugt zur Kontaktierung einer Seitenfläche der Leitungsführungseinrichtung und weiter bevorzugt zu Einleitung von Arretierungsdruckkräften in diese Seitenfläche. Bevorzugt ist die Arretierungsfläche an dem ersten Schenkel angeordnet. Die Arretierungsfläche kann ein Teil der Schaltfläche sein. Bevorzugt ist sie von der Schaltfläche zumindest teilweise verschieden. Bevorzugt sind mittels der Arretierungsfläche Arretierungskräfte in Form von Druckkräften in eine Seitenfläche der Leitungsführungseinrichtung einleitbar. Bevorzugt weist der erste Schenkel eine bevorzugt durch sein freies Ende begrenzte Seitenfläche auf. Vorzugsweise spannt diese Seitenfläche mit der Haltefläche des zweiten Schenkels in Blickrichtung der Drehachse einen Winkel von ca. 90° auf. Bevorzugt umfasst die Arretierungsfläche diese Seitenfläche oder ist hierdurch gebildet. Diese Seitenfläche kann an die Schaltkante bzw. Schaltfläche des ersten Schenkels angrenzen und/oder sie kann in diese übergehen.

Bevorzugt weist die Haltevorrichtung eine Seitenführung für die Leitungsführungseinrichtung auf. Die Seitenführung wirkt bevorzugt mit Seitenflächen der Leitungsführungseinrichtung zusammen. Die Seitenführung kann als sich über die gesamte Längserstreckung der Leitungsführungseinrichtung ausgebildete Führungsschiene ausgebildet sein. Bevorzugt ist die Seitenführung jedoch über die Längserstreckung der Leitungsführungseinrichtung unterbrochen. Bevorzugt umfasst die Seitenführung einen Gegenhalter zur Einleitung von Arretierungsdruckreaktionskräften in eine Seitenfläche der Leitungsführungseinrichtung. Bevorzugt ist der Gegenhalter so ausgebildet, dass er Arretierungsdruckreaktionskräfte in eine Seitenfläche der Leitungsführungseinrichtung einleiten kann, die der Seitenfläche gegenüberliegt, in die die Arretierungsdruckkräfte mittels der Dreharretierungvorrichtung einleitbar sind. Bevorzugt verhindert der Gegenhalter eine seitliche Verlagerung des Bereichs der Leitungsführungseinrichtung, auf den Arretierungsdruckkräfte ausgeübt werden. Bevorzugt ist der Gegenhalter unverlagerbar zur Halterung der Haltevorrichtung ausgebildet.

In Blickrichtung parallel zur Drehachse kann der zweite Schenkel zusammen mit dem ersten Schenkel bevorzugt eine "L"-Form bilden.

Die Länge der größten Erstreckung des ersten Schenkels in Richtung senkrecht zur Drehachse kann zumindest im Wesentlichen der Länge der größten Erstreckung des zweiten Schenkels in Richtung senkrecht zur Drehachse entsprechen. Die Abweichung der Länge der größten Erstreckung des ersten Schenkels in Richtung senkrecht zur Drehachse von der Länge der größten Erstreckung des zweiten Schenkels in Richtung senkrecht zur Drehachse ist bevorzugt kleiner als die Hälfte und insbesondere kleiner als ein Viertel der Länge der größten Erstreckung des zweiten Schenkels in Richtung senkrecht zur Drehachse.

Bevorzugt umfasst das Wippelement einen an dem ersten Schenkel angeordneten, relativ zu diesem bevorzugt abgewinkelten Vorsprung. Dieser Vorsprung verläuft vorzugsweise in einem Abstand zumindest im Wesentlichen parallel zu dem zweiten Schenkel. Der Vorsprung weist bevorzugt eine dem zweiten Schenkel zugewandte Fläche auf. Die Schaltkante bzw. Schaltfläche und/oder die Arretierungsfläche kann an diese Fläche des Vorsprungs angrenzen und/oder in diese Fläche übergehen. Bevorzugt ist der Vorsprung an dem freien Ende des ersten Schenkels angeordnet. Bevorzugt springt der Vorsprung von einem Bereich des ersten Schenkels vor, der in Richtung der Drehachse am weitesten von dem zweiten Schenkel entfernten ist und der weiter bevorzugt den größten Abstand von der Drehachse aufweist.

Die Länge des Vorsprungs zwischen seinem freien Ende und seinem gegenüberliegenden Ende kann zumindest im Wesentlichen der Länge der größten Erstreckung des zweiten Schenkels in Richtung senkrecht zur Drehachse entsprechen. Die Abweichung der Länge des Vorsprungs zwischen seinem freien Ende und seinem gegenüberliegenden Ende von der Länge der größten Erstreckung des zweiten Schenkels in Richtung senkrecht zur Drehachse ist bevorzugt kleiner als die Hälfte und insbesondere kleiner als ein Viertel der Länge der größten Erstreckung des zweiten Schenkels in Richtung senkrecht zur Drehachse.

Bevorzugt kann das Wippelement in Blickrichtung parallel zur Drehachse eine "C"-Form bilden, mit in dieser Blickrichtung besonders bevorzugt zumindest im Wesentlichen gleich langen Schenkeln, die weiter bevorzugt zumindest im Wesentlichen parallel zueinander verlaufen. Bevorzugt können der zweite Schenkel und der Vorsprung die Schenkel dieser "C"-Form bilden und der erste Schenkel den Verbindungsbereich der "C"-Form.

Bevorzugt umfasst die Haltevorrichtung mindestens ein die drehbare Lagerung des Wippelements relativ zu der Halterung bewirkendes und die Drehachse definierendes Drehlager. Bevorzugt umfasst das Drehlager ein an dem Wippelement angeordnetes Drehlagerteil und ein mit diesem Drehlagerteil zusammenwirkendes, an der Halterung angeordnetes Drehlagerteil. Das an der Halterung angeordnete Drehlagerteil kann einen Bolzen umfassen, der in die Halterung eingeschraubt sein kann, und das an dem Wippelement angeordnete Drehlagerteil kann eine mit dem Bolzen korrespondierende Ausnehmung, z.B. in Form einer Bohrung umfassen. Bevorzugt sind zwei Drehlager vorgesehen, die zwei in Richtung der Drehachse voneinander beanstandete Drehlagerteile an dem Wippelement und weiter bevorzugt zwei Drehlagerteile an der Halterung umfassen. Eines der Drehlagerteile des Wippelements kann an dem ersten Schenkel und das andere dieser Drehlagerteile kann an dem zweiten Schenkel angeordnet sein. Bevorzugt ist eines der Drehlagerteile des Wippelements an dem ersten Schenkel angeordnet und das zweite Drehlagerteil des Wippelements an einem Lagervorsprung, der vorzugsweise von dem zweiten Schenkel vorspringt.

In einer Ausführungsform besteht das Wippelement aus dem ersten Schenkel, dem zweiten Schenkel, dem Vorsprung, dem Lagervorsprung und zwei Drehlagerteilen.

Bevorzugt verläuft der Vorsprung schräg zur Drehachse.

In einer bevorzugten Ausführungsform ist das freie Ende des Vorsprungs weiter von der Halteeinrichtung entfernt als sein gegenüberliegendes Ende.

Bevorzugt umfasst die Haltevorrichtung eine Einführvorrichtung. Diese weist vorzugsweise mindestens eine Einführschräge auf. Bevorzugt korrigiert die Einführvorrichtung eine etwaige seitliche Fehlpositionierung der Leitungsführungseinrichtung, zur Gewährleistung einer störungsfreien Einführung der Leitungsführungseinrichtung in die Haltevorrichtung. Die Einführvorrichtung kann die Seitenführung umfassen.

Bevorzugt kann die Halterung bei senkrecht zur Drehachse verlaufenden Schnittebene einen "Z"-förmigen Querschnitt bilden, vorzugsweise mit einem Verbindungsbereich und zwei von gegenüberliegenden Enden dieses Verbindungbereichs jeweils senkrecht und in verschiedene Richtungen vorspringenden Endbereichen. An einem dieser Endbereiche kann mindestens ein senkrecht zur Drehachse verlaufender Fortsatz vorgesehen sein, an dem das Drehlager bzw. ein Drehlagerteil angeordnet sein kann. Bevorzugt weist einer dieser Endbereiche zwei Fortsätze auf, an denen jeweils ein Drehlagerteil angeordnet ist und das Wippelement ist weiter bevorzugt zwischen diesen Fortsätzen angeordnet. An dem anderen Endbereich können Befestigungseinrichtungen zur Befestigung der Halterung beispielsweise an einem Träger, etwa Doppel-T-Träger, vorgesehen sein. Die Befestigungseinrichtungen können Löcher für Befestigungsschrauben umfassen.

Die Halterung kann einen Drehanschlag für das Wippelement bereitstellen. Bevorzugt begrenzt der Drehanschlag eine die Halteeinrichtung von ihrer zweiten Position in die erste Position verlagernde Drehung des Wippelements.

In Richtung der Drehachse betrachtet weist das Wippelement bevorzugt einen Bereich auf, in dem der erste Schenkel in den zweiten Schenkel übergeht. Die Drehachse kann in diesem Bereich angeordnet sein. Die Drehachse kann durch beide Schenkel verlaufen. Bevorzugt verläuft die Drehachse nur durch einen Schenkel, besonders bevorzugt nur durch den ersten Schenkel. Hierdurch kann sich eine besonders vorteilhafte Positionierung des Wippelements relativ zu Leitungsführungseinrichtung ergeben, insbesondere dann, wenn die Halteeinrichtung in ihrer ersten Position ist und dann, wenn die Halteeinrichtung in Zwischenpositionen zwischen der ersten und der zweiten Position ist.

Die erfindungsgemäße Anordnung umfasst mindestens eine Haltevorrichtung nach einem der Ansprüche 1 bis 12. Darüber hinaus umfasst die erfindungsgemäße Anordnung eine Leitungsführungseinrichtung, die sich zwischen zwei relativ zueinander beweglichen Anschlussstellen erstreckt und ein mit einer der Anschlussstellen verbindbares Trum und ein mit der anderen Anschlussstelle verbindbares Trum sowie einen die Trume verbindenden Umlenkbogen umfasst, und eine Längserstreckung, eine Außenfläche, eine Innenfläche und zwei gegenüberliegende Seitenflächen aufweist. Die Leitungsführungseinrichtung ist bevorzugt als Energieführungskette ausgebildet. Die Drehachse, um die das Wippelement der Haltevorrichtung drehbar an der Halterung gelagert ist, ist parallel zur Längserstreckung der Leitungsführungseinrichtung angeordnet. Bevorzugt stimmt die Richtung der Längserstreckung der Leitungsführungseinrichtung mit der Richtung überein, in die die bewegliche Anschlussstelle der Leitungsführungseinrichtung beweglich ist.

Bevorzugt ist die Anordnung so ausgebildet, dass die Haltevorrichtung die Durchführung des Umlenkbogens beim Hin- und Herbewegen der Leitungsführungseinrichtung nicht beeinträchtigt. Bevorzugt ist das Wippelement dreharretierbar.

In einer bevorzugten Ausführungsform befindet sich bei einer Annäherung der Leitungsführungseinrichtung an die Haltevorrichtung durch eine Bewegung der Leitungsführungseinrichtung, insbesondere durch Bewegen der beweglichen Anschlussstelle, die Halteeinrichtung zunächst in ihrer ersten Position.

Die Anordnung ist vorzugsweise so ausgebildet, dass bei einer Annäherung der Leitungsführungseinrichtung an die Haltevorrichtung sich die Halteeinrichtung in ihrer ersten Position befindet und der Umlenkbogen zunächst den zweiten Schenkel des Wippelements passiert, bevorzugt berührungslos, bevor er den ersten Schenkel des Wippelements erreicht, und durch Kontakt mit diesem vor einer vollständigen Durchführung des Umlenkbogens durch die Haltevorrichtung das Wippelement eine die Halteeinrichtung von ihrer ersten Position in die zweite Position verlagernde Drehung vollzieht. Bevorzugt legt sich durch diese Drehung der zweite Schenkel an die Innenfläche der Leitungsführungseinrichtung im Bereich eines Trumes an und hält dieses Trum auf diese Weise. Bevorzugt erfolgt dabei eine Dreharretierung des Wippelements - vorzugsweise indem sich die Arretierungsfläche der Dreharretierungsvorrichtung an eine Seitenfläche der Leitungsführungseinrichtung anlegt. Hierdurch ist bevorzugt ein sicheres Halten der Leitungsführungseinrichtung bewirkt.

Um auch bei einer Bewegung der Leitungsführungseinrichtung in die entgegengesetzte Richtung die Durchführung des Umlenkbogens durch die Haltevorrichtung zu ermöglichen, bewegt sich bei dieser Bewegung der Leitungsführungseinrichtung und einer Annäherung des Umlenkbogens an diese Haltevorrichtung das gehaltene Trum zunächst von dem ersten Schenkel - und damit bevorzugt von der Dreharretierungsvorrichtung - weg, vorzugsweise indem es in den Umlenkbogen übergeht. Hierdurch wird bevorzugt die Dreharretierung deaktiviert. Das Wippelement vollzieht daher bevorzugt eine die Halteeinrichtung von ihrer zweiten Position in die erste Position verlagernde Drehung. Dies geschieht vorzugsweise bevor der Umlenkbogen den zweiten Schenkel erreicht und weiter bevorzugt mittels der Gewichtskraft des zweiten Schenkels und vorzugsweise des Vorsprungs.

In einer bevorzugten Ausführungsform erstreckt sich die Leitungsführungseinrichtung zwischen einer stationären Anschlussstelle und einer beweglichen Anschlussstelle. Bevorzugt umfasst die Leitungsführungseinrichtung ein mit der stationären Anschlussstelle verbindbares oberes Trum und ein mit der beweglichen Anschlussstelle verbindbares unterhalb des Obertrums verlaufendes unteres Trum. Hierdurch können Vorteile der Erfindung besonders zur Geltung kommen. Bevorzugt ist mittels der Haltevorrichtung ein Durchsacken des Obertrums verhinderbar, das Obertrum wird bevorzugt mittels der Haltevorrichtung also oben gehalten. Bevorzugt ist mittels der Haltevorrichtung eine Führung und eine Verhinderung eines Herauskippens des Obertrums bewirkbar.

Alternativ kann die Leitungsführungseinrichtung ein mit der stationären Anschlussstelle verbindbares unteres Trum und ein mit der beweglichen Anschlussstelle verbindbares oberes Trum umfassen.

In einer weiteren Alternative kann die Leitungsführungseinrichtung ein mit der stationären Anschlussstelle verbindbares vertikal verlaufendes erstes Trum und ein mit der beweglichen Anschlussstelle verbindbares vertikal verlaufendes zweites Trum umfassen.

Bevorzugt weist die Anordnung mehrere Haltevorrichtungen auf welche entlang der Verfahrstrecke der Leitungsführungseinrichtung verteilt angeordnet sind, insbesondere um das Obertrum in regelmäßigen Abständen zu stützen.

In der Ausführungsform, in der die Anordnung mehrere Haltevorrichtungen umfasst, sind bevorzugt die Wippelemente der Haltevorrichtungen nur an einer Seite der Leitungsführungseinrichtung angeordnet. Hierdurch kann die Anzahl der erforderlichen Wippelemente verglichen mit einer Anordnung, bei der die Wippelemente auf beiden Seiten der Leitungsführungseinrichtung angeordnet sind, halbiert sein. Es hat sich gezeigt, dass eine beidseitige Anordnung von Wippelementen, insbesondere in der Ausführungsform, in der die Haltevorrichtung eine Seitenführung für die Leitungsführungseinrichtung aufweist, die einen Gegenhalter umfasst, nicht zwingend erforderlich ist.

Bevorzugt ist die Halteeinrichtung durch die Schalteinrichtung, insbesondere durch einen Kontakt der Leitungsführungseinrichtung mit der Schalteinrichtung, von der ersten Position in die zweite Position verlagerbar und durch Gewichtskraft und/oder Federkraft von der zweiten Position in die erste Position verlagerbar. Die Halteeinrichtung kann mittels Gewichtskraft des ersten Schenkels von der zweiten Position die erste Position verlagerbar sein. Die Halteeinrichtung kann mittels Gewichtskraft des Vorsprungs von der zweiten Position die erste Position verlagerbar sein.

Bevorzugt ist die zweite Position der Halteeinrichtung eine Halte- und/oder Stützposition, in der die Halteeinrichtung ein Trum der Leitungsführungseinrichtung halten bzw. als Abstützung des Obertrums von unten wirken kann, und die erste Position der Halteeinrichtung ist eine Ausweichposition, in der das Stützelement kein Trum der Leitungsführungseinrichtung halten bzw. nicht als Abstützung des Obertrums von unten wirken kann. Bevorzugt beeinträchtigt die Halteeinrichtung in ihrer ersten Position die Durchführung des Umlenkbogens durch die Haltevorrichtung beim Hin- und Herbewegen der Leitungsführungseinrichtung nicht. Bevorzugt ist eine Durchführung des Umlenkbogens durch die Haltevorrichtung beim Hin- und Herbewegen der Leitungsführungseinrichtung nicht möglich, solange die Halteeinrichtung in ihrer zweiten Position ist.

Bevorzugt ist der Abstand zwischen der Halteeinrichtung und dem Vorsprung geringfügig größer als die Höhe der Leitungsführungseinrichtung.

Bevorzugt ist das Wippelement so ausgebildet, dass der zweite Schenkel, vorzugsweise mit seiner Haltefläche, an der Innenfläche der Leitungsführungseinrichtung, besonders bevorzugt Unterseite des Obertrums, anliegt, wenn die Halteeinrichtung in ihrer zweiten Position ist. Vorzugsweise ist das Wippelement so ausgebildet, dass der erste Schenkel, genauer gesagt die Arretierungsfläche der Dreharretierungsvorrichtung, an einer Seitenfläche der Leitungsführungseinrichtung, besonders bevorzugt des Obertrums oder des Umlenkbogens anliegt, wenn die Halteeinrichtung in ihrer zweiten Position ist. Weiter bevorzugt ist das Wippelement so ausgebildet, dass der zweite Schenkel, genauer gesagt die Arretierungsfläche der Dreharretierungsvorrichtung, das Wippelement gegen eine die Halteeinrichtung von ihrer zweiten Position in die erste Position verlagernde Drehung durch Einleiten von seitlichen Kräften in das Obertrum arretiert.

In einer Ausführungsform liegt der Vorsprung auf der Außenfläche des Obertrums auf, wenn die Halteeinrichtung in ihrer zweiten Position ist. Insbesondere in dieser Ausführungsform kann die Schalteinrichtung und/oder die Arretierungsvorrichtung den Vorsprung umfassen. Die Schaltfläche und/oder die Arretierungsfläche kann dann zumindest teilweise an dem Vorsprung angeordnet sein.

Der Vorsprung kann es ermöglichen, die gleiche Haltevorrichtung mit verschieden breiten Leitungsführungseinrichtungen anzuordnen. Der Vorsprung kann die Funktionalität der Schalteinrichtung und/oder der Arretierungsvorrichtung auch bei schmalen Leitungsführungseinrichtungen gewährleisten.

Alternativ liegt der Vorsprung nicht auf der Außenfläche des Obertrums auf, wenn die Halteeinrichtung in ihrer zweiten Position ist, sondern verläuft weiter bevorzugt in einem Abstand parallel hierzu. In dieser Ausführungsform ist der Vorsprung bevorzugt kein Teil der Schalteinrichtung und/oder der Arretierungsvorrichtung. Der Vorsprung kann dann zumindest in erster Linie zur Vergrößerung der Gewichtskraft dienen, mittels der die Halteeinrichtung von der zweiten Position in die erste Position verlagerbar ist und/oder eine Redundanz darstellen, für die Schalteinrichtung und/oder die Arretierungsvorrichtung.

Bevorzugt ist ein Aufliegen des Vorsprungs auf der Außenfläche der Leitungsführungseinrichtung keine Voraussetzung dafür, dass sich die Halteeinrichtung in ihrer zweiten Position befindet. Die Verlagerung der Halteeinrichtung von der ersten Position in die zweite Position und/oder umgekehrt wird bevorzugt also zumindest nicht ausschließlich durch ein mit der Außenfläche der Leitungsführungseinrichtung zusammenwirkendes Element bewirkt und/oder aufrechterhalten.

Der Vorsprung kann zusammen mit dem zweiten Schenkel eine zangenartige Aufnahme des Obertrums zwischen dem Vorsprung und dem zweiten Schenkel bewirken. Diese zangenartige Aufnahme kann, solange das Obertrum im Bereich des Vorsprungs angeordnet ist, eine Drehung des Wippelements und damit eine Verlagerung der Halteeinrichtung von der ersten Position in die zweite Position erschweren oder verhindern.

Die Schalteinrichtung kann die Verlagerung der Halteeinrichtung zwischen der ersten Position und der zweiten Position durch punktförmigen, linienförmigen oder flächenförmigen Kontakt zwischen der Schaltkante bzw. Schaltfläche des ersten Schenkels des Wippelements und der Leitungsführungseinrichtung bewirken. Die Schaltkante bzw. Schaltfläche kann hierbei eine Kante der Leitungsführungseinrichtung zwischen der Außenfläche und einer Seitenfläche und/oder die Außenfläche und/oder eine Seitenfläche der Leitungsführungseinrichtung kontaktieren.

Die Anordnung kann einen Träger, beispielsweise T-Träger oder einen Doppel-T-Träger mit einem Steg und mindestens einem Gurt, beispielsweise Untergurt, umfassen und ein Trum der Leitungsführungseinrichtung kann an dem Gurt angeordnet sein und insbesondere an dem Gurt entlang laufen. Beispielsweise kann ein Trum, insbesondere das mit der beweglichen Anschlussstelle verbindbare Trum, auf einem Gurt, insbesondere Untergurt, eines T-Trägers oder eines Doppel-T-Trägers gleiten. Der Träger kann Teil eines Krans sein.

Die Haltevorrichtung kann insbesondere zum Halten einer Leitungsführungseinrichtung bzw. Energieführungskette eingesetzt werden, die mit einem oberhalb eines Untertrums verlaufenden und auf Abstand zu diesem gehaltenen Obertrum angeordnet ist, bei welcher insbesondere das Untertrum das bewegliche Trum, d.h. das mit der beweglichen Anschlussstelle verbundene Trum, ist.

Die Haltevorrichtung kann an dem Steg des Trägers befestigt sein. Die Seitenführung der Haltevorrichtung kann durch den Steg zumindest teilweise gebildet sein oder mit diesem zusammenwirken.

Durch diese Nutzung des ohnehin vorhandenen Stegs und/oder Gurts des Trägers kann der Herstellungsaufwand der Haltevorrichtung reduziert sein.

Die Begriffe oberes Trum und Obertrum werden vorliegend synonym verwendet, ebenso wie die Begriffe unteres Trum und Untertrum.

Die Merkmale aller Aspekte, d. h. insbesondere Merkmale der Haltevorrichtung und der Anordnung, sind im Rahmen der Erfindung zunächst unabhängig offenbart und beansprucht, jedoch erkennbar auch miteinander kombinierbar.

Sämtliche Merkmale des Ausführungsbeispiels bzw. der jeweiligen weiter oben dargestellten Aspekte und Ausführungsformen sind unabhängig voneinander jeweils für sich genommen oder in Kombination miteinander, auch in Kombination mit Merkmalen anderer Aspekte und Ausführungsformen, allgemein als Merkmale der Erfindung offenbart.

Weitere Einzelheiten, Vorteile und Merkmale der Erfindung lassen sich, ohne Beschränkung der Allgemeinheit der vorstehenden Beschreibung, dem nachfolgenden Teil der Beschreibung entnehmen, in welchem ein Ausführungsbeispiel anhand der beigefügten Zeichnungen näher erläutert wird.

Es zeigen schematisch:
- Fig. 1: eine perspektivische Darstellung eines Ausführungsbeispiels der erfindungsgemäßen Anordnung und der erfindungsgemäßen Haltevorrichtung, bei sich der Haltevorrichtung nähernden Leitungsführungseinrichtung,
- Fig. 2: eine Ansicht wie in Figur 1, mit zur Verdeutlichung nur teilweise dargestellter Haltevorrichtung,
- Fig. 3: eine Darstellung wie in Figur 1, mit in der Haltevorrichtung angekommenen Leitungsführungseinrichtung,
- Fig. 4: eine Ansicht wie in Figur 3, mit zur Verdeutlichung nur teilweise dargestellter Haltevorrichtung,
- Fig. 5: eine Ansicht wie in Fig. 1, in der Haltevorrichtung gehaltenen Leitungsführungseinrichtung,
- Fig. 6: eine Ansicht wie in Figur 5, mit zur Verdeutlichung nur teilweise dargestellter Haltevorrichtung,
- Fig. 7-9: eine Darstellung der Haltevorrichtung von drei Seiten,
- Fig. 10: eine perspektivische Darstellung der Haltevorrichtung aus den Figuren 7-9,
- Fig. 11-13A: eine Darstellung des Wippelements von drei Seiten,
- Fig. 13B: eine perspektivische Darstellung des Wippelements
- Fig. 14, 15: perspektivische Darstellungen des Wippelements aus verschiedenen Blickwinkeln,
- Fig. 16-18: eine Darstellung der Einführvorrichtung von drei Seiten,
- Fig. 19, 20: perspektivische Darstellungen der Einführvorrichtung aus verschiedenen Blickwinkeln,
- Fig. 21-23: eine Darstellung der Halterung von drei Seiten
- Fig. 24, 25: perspektivische Darstellungen der der Halterung aus verschiedenen Blickwinkeln,
- Fig. 26-28: die Leitungsführungseinrichtung und das Wippelement, bei verschiedenen Rotationslagen des Wippelements um die Drehachse,
- Fig. 29: eine Darstellung ähnlich Fig. 3, aus einem etwas anderen Blickwinkel und mit etwas weiter in der Haltevorrichtung angekommenen Leitungsführungseinrichtung,
- Fig. 30: schematisch ein Ausführungsbeispiel der Anordnung an einem Kran.

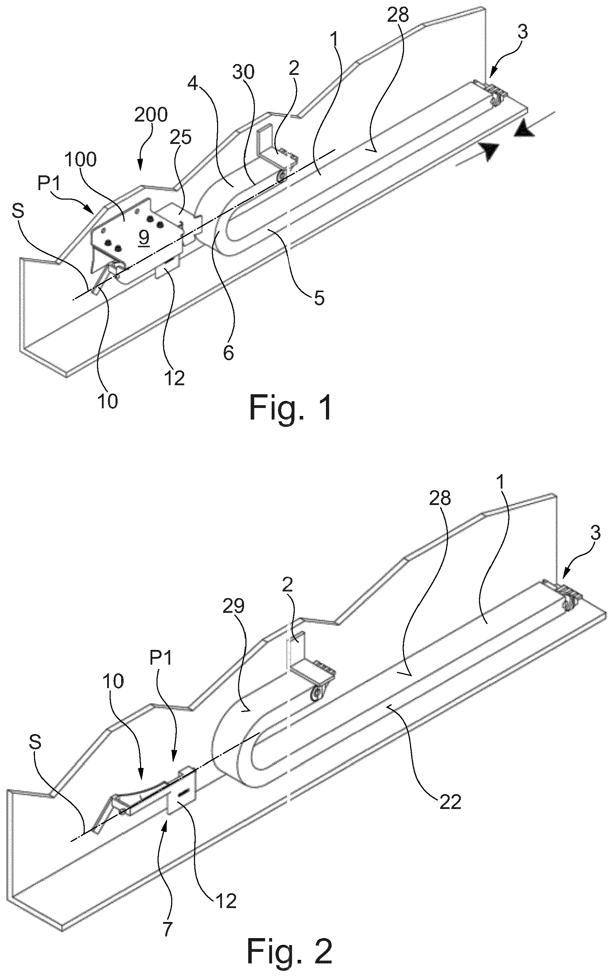

Das in den Figuren gezeigte Ausführungsbeispiel der erfindungsgemäßen Haltevorrichtung ist als Ganzes mit 100 bezeichnet. Die Haltevorrichtung 100 dient zum Halten einer Leitungsführungseinrichtung. Wie Fig. 1 zeigt, erstreckt sich diese Leitungsführungseinrichtung zwischen zwei relativ zueinander beweglichen Anschlussstellen 2, 3 und umfasst ein mit einer der Anschlussstellen 2 verbindbares Trum 4 und ein mit der anderen Anschlussstelle 3 verbindbares Trum 5 sowie einen die Trume verbindenden Umlenkbogen 6. Die Leitungsführungseinrichtung ist in dem gezeigten Ausführungsbeispiel als Energieführungskette 1 ausgebildet und umfasst ein mit der stationären Anschlussstelle 2 verbundenes oberes Trum 4 und ein mit der beweglichen Anschlussstelle 3 verbundenes unterhalb des Obertrums verlaufendes unteres Trum 5.

Wie die Fig. 1 bis 15 zeigen, weist die Haltevorrichtung 100 eine Halteeinrichtung 7, die zwischen einer ersten Position P1 und einer zweiten Position P2 verlagerbar ist, und eine Schalteinrichtung 8, zur Bewirkung dieser Verlagerung auf.

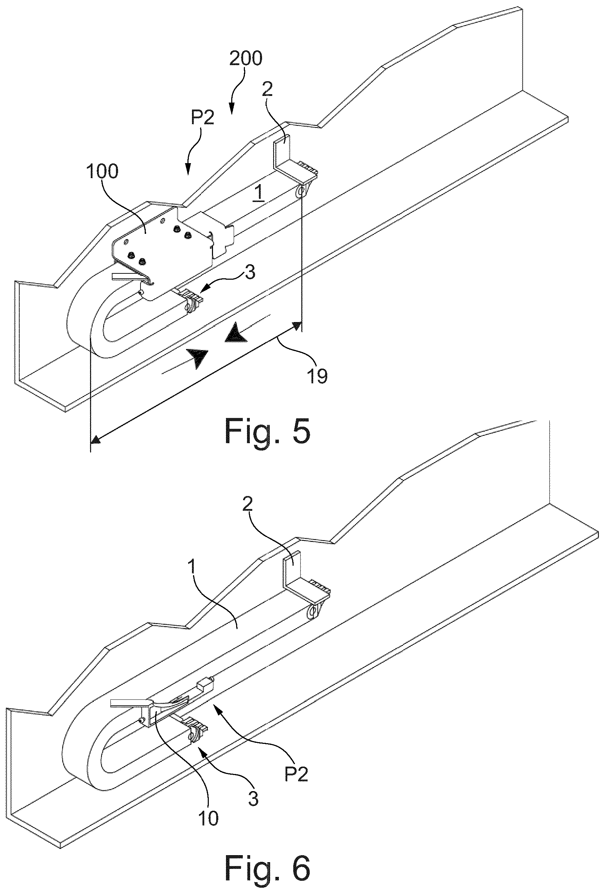

Insbesondere aus den Fig. 2 und 6 geht hervor, dass die zweite Position P2 der Halteeinrichtung 7 eine Halte- und Stützposition ist, in der mittels der Halteeinrichtung das Obertrum von unten abstützbar ist und dass die erste Position P1 der Halteeinrichtung 7 eine Ausweichposition ist, in der mittels der Halteeinrichtung 7 ein Trum der Leitungsführungseinrichtung nicht haltbar bzw. das Obertrum nicht von unten abstützbar ist.

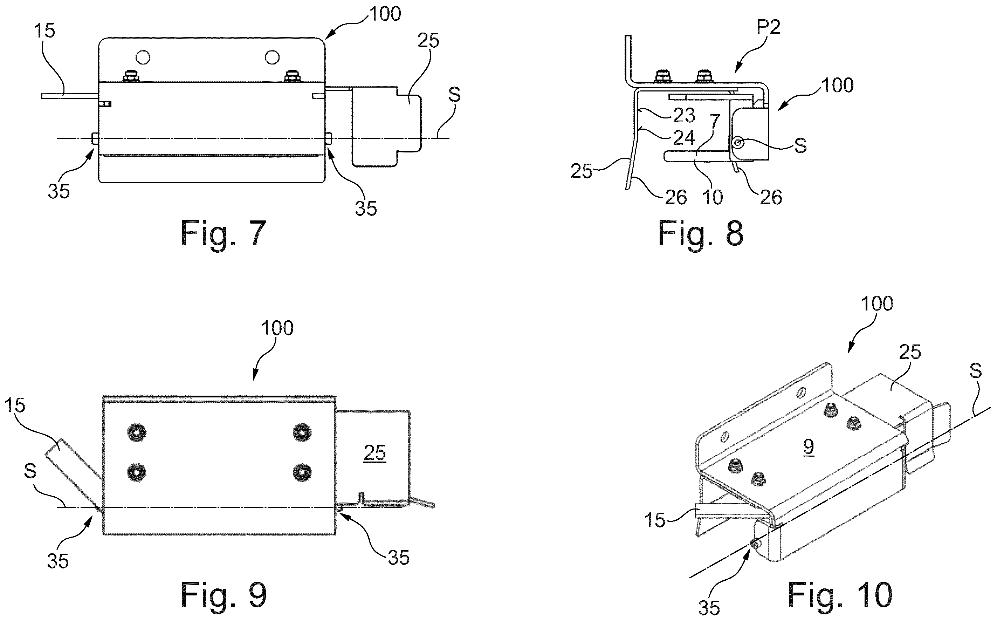

Die Haltevorrichtung 100 weist zudem eine Halterung 9 für die Halteeinrichtung 7 auf (siehe Fig. 10 und Fig. 21-25).

Die Halteeinrichtung 7 und die Schalteinrichtung 8 sind an einem um eine Drehachse S drehbar an der Halterung 9 gelagerten Wippelement 10 angeordnet. Das Wippelement weist einen ersten Schenkel 11 und einem zweiten Schenkel 12 auf. Der zweite Schenkel 12 ist in Längsrichtung der Drehachse S zu dem ersten Schenkel 11 versetzt angeordnet (siehe Fig. 1, 2 und 15).

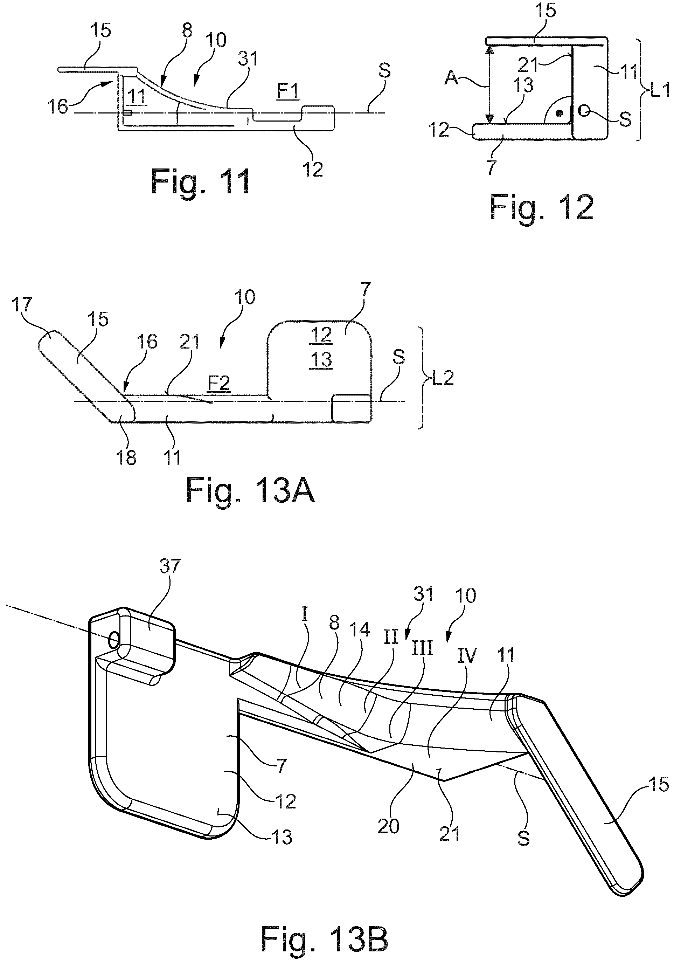

Jeder Schenkel 11, 12 belässt im Bereich der Drehachse S, über den sich der jeweils andere Schenkel 11, 12 erstreckt, einen Freiraum F1, F2 (Fig. 11 und 13). So belässt der erste Schenkel 11 in dem Bereich der Drehachse S, über den sich der zweite Schenkel 12 erstreckt, einen Freiraum F1 (Fig. 11) und der zweite Schenkel 12 belässt in dem Bereich der Drehachse S, über den sich der erste Schenkel 11 erstreckt, einen Freiraum F2 (Fig. 13).

Das Wippelement 10 ist um ca. 90° drehbar gelagert (Fig. 2, 6 und 26, 28).

Die Schalteinrichtung 8 ist durch den Umlenkbogen 6 betätigbar und hierdurch ist die Halteeinrichtung 7 von ihrer ersten Position P1 in ihre zweite Position P2 verlagerbar.

Das Wippelement 10 ist zudem unter Zuhilfenahme einer Dreharretierungsvorrichtung 20 durch die Leitungsführungseinrichtung dreharretierbar.

Die Dreharretierungsvorrichtung 20 weist Bereiche auf, die von der Schalteinrichtung 8 verschieden sind.

Das Wippelement 10 ist einstückig ausgebildet und die Schenkel 11, 12 sind zueinander um ca. 90° abgewinkelt.

Wie z.B. Fig. 13 zeigt, umfasst die Halteeinrichtung 7 eine als Obertrumauflagefläche ausgebildet ebene Haltefläche 13 des zweiten Schenkels 12.

Die Leitungsführungseinrichtung bildet zwischen jeder Seitenfläche 22 und der Außenfläche 29 der Leitungsführungseinrichtung jeweils eine Kante 30 aus.

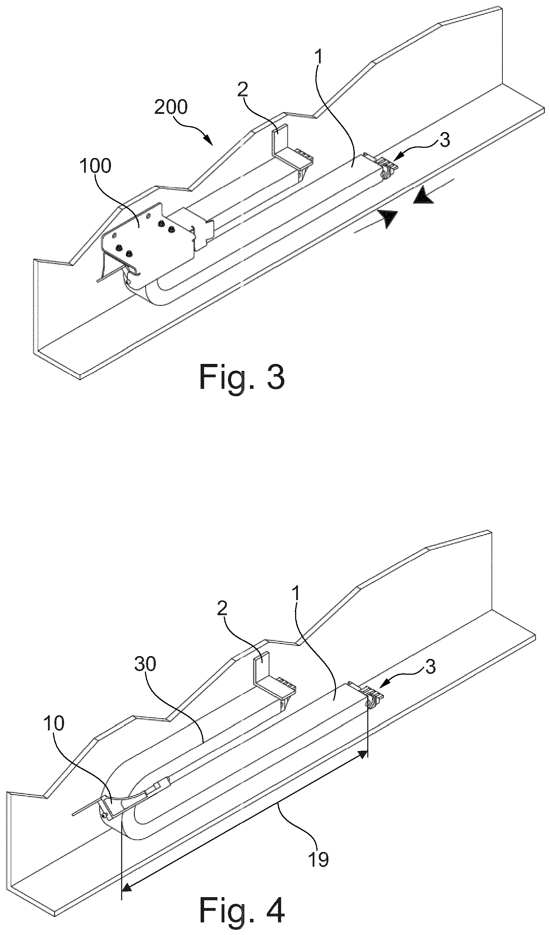

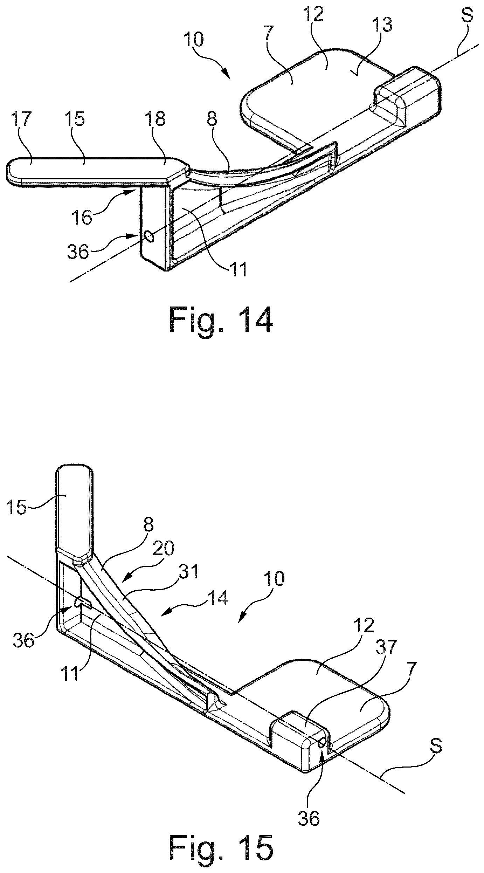

Wie Fig. 4 und 15 zeigt, umfasst der erste Schenkel 11 eine Schaltfläche 14 zur Kontaktierung der Leitungsführungseinrichtung.

Die Schaltfläche 14 an dem freien Ende 31 des ersten Schenkels 11 angeordnet. Sie ist am besten in Fig. 13B und Fig. 15 zu erkennen. Sie verläuft gekrümmt und zwar derart, dass ihr Abstand zur Drehachse in entlang der Drehachse und von der Halteeinrichtung weg weisender Richtung zunimmt und hierdurch erreicht wird, dass die Schaltfläche 14 in der Richtung, die der Bewegungsrichtung der sich der Halteeinrichtung nähernden Leitungsführungseinrichtung entspricht, (in Fig. 13B also von links nach rechts) in zunehmendem Maße in den Verfahrweg der Leitungsführungseinrichtung hineinragt. Fig. 13B zeigt Kontaktbereiche I, II, III zwischen der Leitungsführungseinrichtung und der Schaltfläche 14 in der Reihenfolge, in der sie bei in Fig. 13B von links kommender Leitungsführungseinrichtung stattfinden sowie einen Kontaktbereich IV zwischen der Leitungsführungseinrichtung und der Arretierungsfläche 21.

Die Dreharretierungsvorrichtung 20 dient zur Verhinderung einer Drehung des Wippelements 10 bei in Figur 5 gezeigter von der Halteeinrichtung 7 gehaltener Leitungsführungseinrichtung, solange der Umlenkbogen 6 nicht durchgeführt wird.

Die Dreharretierungsvorrichtung 20 umfasst eine an dem ersten Schenkel 11 angeordnete Arretierungsfläche 21 zur Kontaktierung einer Seitenfläche 22 der Leitungsführungseinrichtung und zu Einleitung von Arretierungsdruckkräften in diese Seitenfläche 22.

Wie etwa Fig. 13B zeigt, geht die Schaltfläche 14 in die Arretierungsfläche 21 über.

Der erste Schenkel 11 weist eine durch sein freies Ende 31 begrenzte und die Arretierungsfläche 21 bildende Seitenfläche auf, die mit der Haltefläche 13 des zweiten Schenkels 12 in Blickrichtung der Drehachse S einen Winkel von ca. 90° aufspannt (siehe Fig. 12).

Die Haltevorrichtung 100 weist eine Seitenführung 23 für die Leitungsführungseinrichtung auf. Die Seitenführung 23 wirkt mit Seitenflächen der Leitungsführungseinrichtung zusammen. Die Seitenführung umfasst einen Gegenhalter 24 zur Einleitung von Arretierungsdruckreaktionskräften in eine Seitenfläche 22 der Leitungsführungseinrichtung (siehe z.B. Fig. 8). Der Gegenhalter 24 ist so ausgebildet, dass er Arretierungsdruckreaktionskräfte in eine Seitenfläche der Leitungsführungseinrichtung einleiten kann, die der Seitenfläche gegenüberliegt, in die die Arretierungsdruckkräfte mittels der Dreharretierungvorrichtung 20 einleitbar sind.

In Blickrichtung parallel zur Drehachse S bildet der zweite Schenkel 12 zusammen mit dem ersten Schenkel 11 eine "L"-Form (siehe Fig. 12, wobei hier der Blick von der falschen Seite parallel zur Drehachse S gerichtet ist, sodass sich das "L" spiegelverkehrt zeigt).

Wie die Figuren 14 und 15 zeigen, umfasst das Wippelement 10 einen an dem ersten Schenkel 11 angeordneten, relativ zu diesem abgewinkelten Vorsprung 15. Dieser Vorsprung verläuft in einem Abstand A parallel zu dem zweiten Schenkel 12 (siehe Fig. 12). Der Vorsprung 15 springt von einem Bereich 16 des ersten Schenkels 11 von dessen freiem Ende 31 vor, der in Richtung der Drehachse S am weitesten von dem zweiten Schenkel 12 entfernten ist und der den größten Abstand von der Drehachse S aufweist.

Die Länge L1 der größten Erstreckung des ersten Schenkels 11 in Richtung senkrecht zur Drehachse S entspricht zumindest im Wesentlichen der Länge L2 der größten Erstreckung des zweiten Schenkels 12 in Richtung senkrecht zur Drehachse S (siehe z.B. Fig. 12, 13).

Die Länge des Vorsprungs zwischen seinem freien Ende 17 und seinem gegenüberliegenden Ende 18 entspricht im Wesentlichen der Länge der Erstreckung des zweiten Schenkels 12 in Richtung senkrecht zur Drehachse S.

Das Wippelement 10 bildet in Blickrichtung parallel zur Drehachse eine "C"-Form, mit in dieser Blickrichtung in ungefähr gleich langen Schenkeln, die parallel zueinander verlaufen. Der zweite Schenkel 12 und der Vorsprung 15 bilden dabei die Schenkel dieser "C"-Form und der erste Schenkel 11 den Verbindungsbereich der C-Form (siehe Figur 12, wobei hier der Blick von der falschen Seite parallel zur Drehachse S gerichtet ist, sodass sich das "C" spiegelverkehrt zeigt).

Der Vorsprung 15 verläuft schräg zur Drehachse S und zwar derart, dass sein freies Ende 17 weiter von der Halteeinrichtung 7 entfernt ist als sein gegenüberliegendes Ende 18 (siehe Fig. 13).

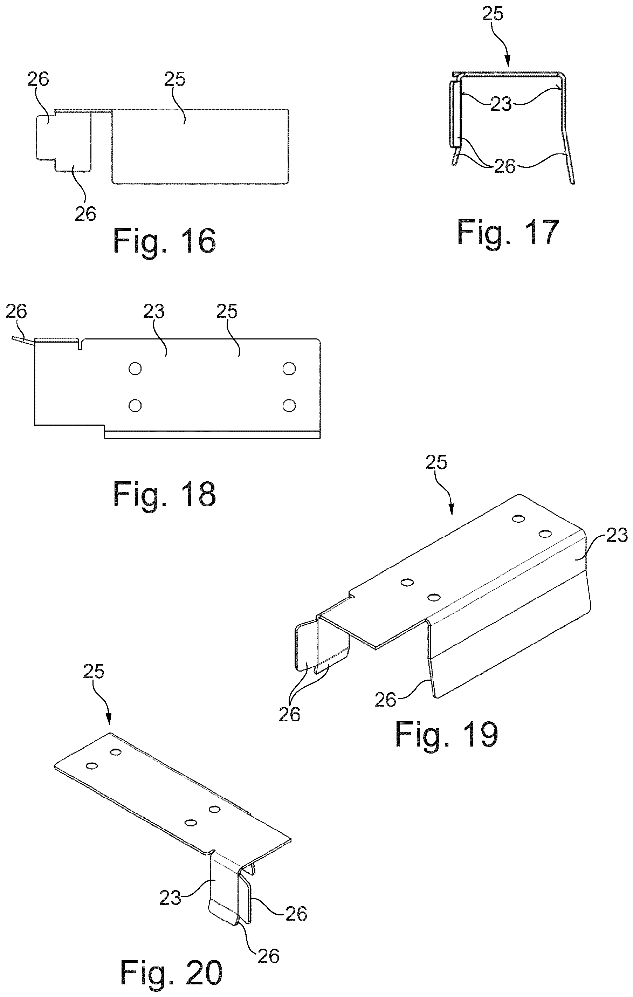

Die Haltevorrichtung 100 umfasst eine Einführvorrichtung 25. Diese weist mehrere Einführschrägen 26 auf. Die Einführvorrichtung 25 umfasst im gezeigten Ausführungsbeispiel auch die Seitenführung 23 (siehe Fig. 16 bis 20).

Es sind zwei Drehlager 35 vorgesehen, die zwei in Richtung der Drehachse S voneinander beanstandete Drehlagerteile 36 an dem Wippelement 10 und zwei Drehlagerteile an der Halterung 9 umfassen. Eines der Drehlagerteile 36 des Wippelements 10 ist an dem ersten Schenkel 11 angeordnet und das zweite Drehlagerteil 36 des Wippelements 10 an einem Lagervorsprung 37, der von dem zweiten Schenkel 12 vorspringt (siehe Fig. 7, 14 und 15).

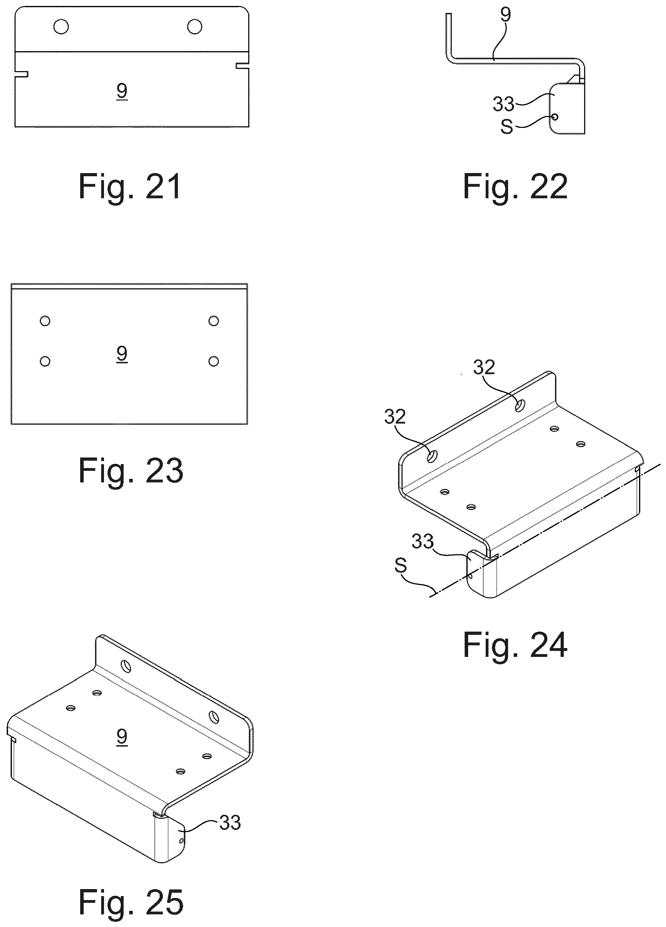

Die Halterung 9 bildet bei senkrecht zur Drehachse verlaufenden Schnittebene einen "Z"-förmigen Querschnitt mit einem Verbindungsbereich und zwei von gegenüberliegenden Enden dieses Verbindungbereichs jeweils senkrecht und in verschiedene Richtungen vorspringenden Endbereichen (erkennbar aus Fig. 22, wobei hier der Blick von der falschen Seite parallel zur Drehachse S gerichtet ist, sodass sich das "Z" spiegelverkehrt zeigt. Zudem zeigt Fig. 22 das "Z" liegend). Einer der Endbereiche (in Fig. 22 der rechts dargestellte) weist zwei Fortsätze 33 auf, an denen jeweils ein Drehlagerteil 36 der beiden Drehlager 35 der Haltevorrichtung 100 angeordnet ist und das Wippelement 10 ist zwischen diesen Fortsätzen 33 angeordnet. An dem anderen Endbereich sind Befestigungseinrichtungen in Form von Löchern 32 zur Befestigung der Halterung beispielsweise an einem Doppel-T-Träger vorgesehen.

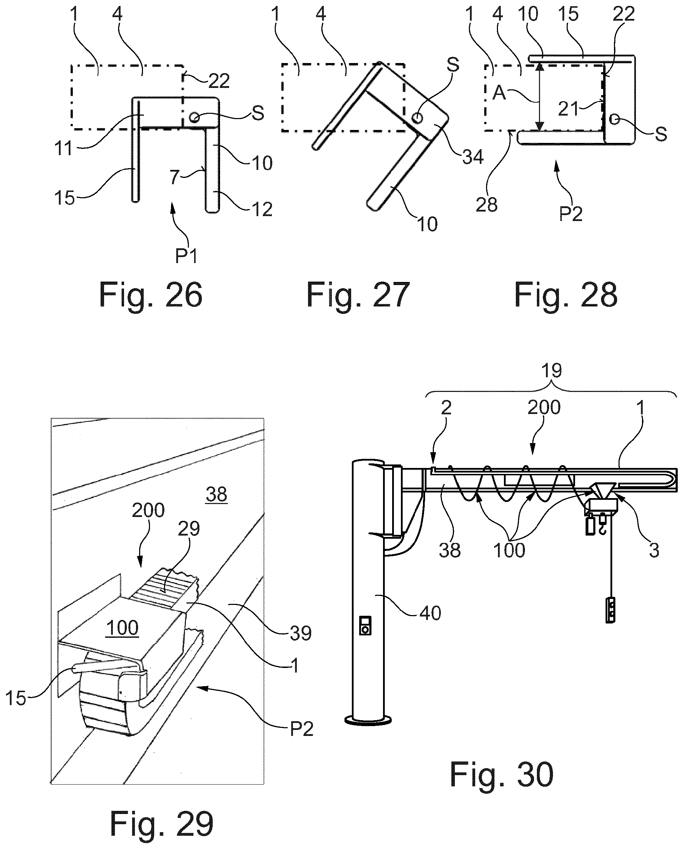

In Richtung der Drehachse S betrachtet weist das Wippelement 10 einen Bereich 34 auf (in Fig. 27 gestrichelt dargestellt), in dem der erste Schenkel 11 in den zweiten Schenkel 12 übergeht. Die Drehachse S ist nicht in diesem Bereich 34 angeordnet, sondern verläuft nur durch einen Schenkel und zwar den ersten Schenkel 11 (siehe Fig. 26).

Ein Ausführungsbeispiel der erfindungsgemäßen Anordnung 200 mit mehreren Haltevorrichtungen 100 und einer Leitungsführungseinrichtung in Form einer Energieführungskette 1, zeigen die Fig. 1 bis 6, 29 und 30, wobei in den Fig. 1 bis 6 und 29 nur ein Ausschnitt gezeigt, bzw. nur eine Haltevorrichtung 100 dargestellt ist. Die Drehachse S, um die das Wippelement 10 drehbar an der Halterung 9 gelagert ist, ist parallel zur Längserstreckung 19 der Leitungsführungseinrichtung angeordnet (siehe Fig. 1).

Bei einer Annäherung der Leitungsführungseinrichtung an die Haltevorrichtung 100 durch entsprechendes Bewegen der beweglichen Anschlussstelle 3 befindet sich die Halteeinrichtung 7 zunächst in ihrer ersten Position P1 (siehe Fig. 1 und 2).

Die Anordnung 200 ist so ausgebildet, dass bei einer Annäherung der Leitungsführungseinrichtung an die Haltevorrichtung 100 der Umlenkbogen 6 zunächst den zweiten Schenkel 12 des Wippelements 10 berührungslos passiert (siehe Fig. 2 und 4), bevor er den ersten Schenkel 11 des Wippelements 10 erreicht, und durch Kontakt mit diesem das Wippelement 10 eine die Halteeinrichtung 7 von ihrer ersten Position P1 in die zweite Position P2 verlagernde Drehung vollzieht (siehe Fig. 4 und 6). Durch diese Drehung legt sich der zweite Schenkel 12 an die Innenfläche 28 der Leitungsführungseinrichtung im Bereich des Obertrums 4 an und hält und stützt dieses Trum 4 auf diese Weise (etwa Figuren 6 und 28).

Zur Aufrechterhaltung dieses Stützens erfolgt dabei eine Dreharretierung des Wippelements 10 indem sich die Arretierungsfläche 21 der Dreharretierungsvorrichtung 20 an eine Seitenfläche 22 der Leitungsführungseinrichtung anlegt (siehe Fig. 28).

Um bei einer Bewegung der Leitungsführungseinrichtung, insbesondere der beweglichen Anschlussstelle, in die entgegengesetzte Richtung die Durchführung des Umlenkbogens 6 durch die Haltevorrichtung 100 nicht zu beeinträchtigen, bewegt sich bei einer Annäherung des Umlenkbogens 6 an diese Haltevorrichtung 100 das gehaltene Obertrum 4 zunächst von dem ersten Schenkel 11 und damit von der Dreharretierungsvorrichtung 20 weg, wodurch diese deaktiviert wird. Das Wippelement 10 vollzieht daher eine die Halteeinrichtung 7 von ihrer zweiten Position P2 in die erste Position P1 verlagernde Drehung. Dies geschieht bevor der Umlenkbogen 6 den zweiten Schenkel 12 erreicht und zwar mittels der Gewichtskraft des zweiten Schenkels 12 und des Vorsprungs 15.

Die Wippelemente 10 der Haltevorrichtungen 100 sind nur an einer Seite der Leitungsführungseinrichtung angeordnet.

Wie Figur 28 zeigt, ist der Abstand A zwischen der Halteeinrichtung 7 und dem Vorsprung 15 geringfügig größer als die Höhe der Leitungsführungseinrichtung.

Das Wippelement 10 ist so ausgebildet, dass der zweite Schenkel 12 mit seiner Haltefläche 13 an der Innenfläche 28 der Leitungsführungseinrichtung, genauer gesagt der Unterseite des Obertrums 4, anliegt, wenn die Halteeinrichtung in ihrer zweiten Position P2 ist. Das Wippelement 10 ist zudem so ausgebildet, dass der erste Schenkel 11, genauer gesagt die Arretierungsfläche 21 der Dreharretierungsvorrichtung 20, an einer Seitenfläche 22 der Leitungsführungseinrichtung, genauer gesagt des Obertrums 4 anliegt, wenn die Halteeinrichtung 7 in ihrer zweiten Position P2 ist.

Im gezeigten Ausführungsbeispiel gleitet das Untertrum auf dem Untergurt 39 eines Doppel-T-Trägers 38, der Teil eines Krans 40 ist (Fig. 29, 30).

Fig. 29 lässt erkennen, dass ein Aufliegen des Vorsprungs 15 auf der Außenfläche 29 der Leitungsführungseinrichtung im gezeigten Ausführungsbeispiel keine Voraussetzung dafür ist, dass sich die Halteeinrichtung 7 in ihrer zweiten Position P2 befindet.

Die Haltevorrichtung 100 ist im gezeigten Ausführungsbeispiel an dem Steg des Doppel-T-Trägers 38 befestigt und der Steg unterstützt die Seitenführung 23 der Haltevorrichtung 100.

### Bezugszeichenliste

- 100: Haltevorrichtung
- 200: Anordnung
- 1: Energieführungskette
- 2: Anschlussstelle
- 3: Anschlussstelle
- 4: Trum
- 5: Trum
- 6: Umlenkbogen
- 7: Halteeinrichtung
- 8: Schalteinrichtung
- 9: Halterung
- 10: Wippelement
- 11: erster Schenkel
- 12: zweiter Schenkel
- 13: Haltefläche
- 14: Schaltfläche
- 15: Vorsprung
- 16: Bereich des ersten Schenkels
- 17: freies Ende des Vorsprungs
- 18: dem freien Ende gegenüberliegendes Ende des Vorsprungs
- 19: Längserstreckung der Leitungsführungseinrichtung
- 20: Dreharretierungsvorrichtung
- 21: Arretierungsfläche
- 22: Seitenfläche der Leitungsführungseinrichtung
- 23: Seitenführung
- 24: Gegenhalter
- 25: Einführvorrichtung
- 26: Einführschrägen
- 28: Innenfläche der Leitungsführungseinrichtung
- 29: Außenfläche der Leitungsführungseinrichtung
- 30: Kante der Leitungsführungseinrichtung
- 31: freies Ende des ersten Schenkels
- 32: Löcher
- 33: Fortsätze
- 34: Bereich
- 35: Drehlager
- 36: Drehlagerteile
- 37: Lagervorsprung
- 38: Doppel-T-Träger
- 39: Untergurt
- 40: Kran

- A: Abstand zwischen Vorsprung und zweitem Schenkel
- F1: Freiraum
- F2: Freiraum
- L1: Länge
- L2: Länge
- P1: erste Position
- P2: zweite Position
- S: Drehachse
- I-IV: Kontaktbereiche

## Patentansprüche

1. Haltevorrichtung (100) für eine Leitungsführungseinrichtung, insbesondere für eine Energieführungskette (1), die sich zwischen zwei relativ zueinander beweglichen Anschlussstellen (2, 3) erstreckt und ein mit einer der Anschlussstellen (2) verbindbares Trum (4) und ein mit der anderen Anschlussstelle (3) verbindbares Trum (5) sowie einen die Trume verbindenden Umlenkbogen (6) umfasst,
wobei die Haltevorrichtung (100) mindestens eine Halteeinrichtung (7), die zwischen einer ersten Position (P1) und einer zweiten Position (P2) verlagerbar ist,
eine Schalteinrichtung (8), mittels der diese Verlagerung bewirkbar ist,
und eine Halterung (9) für die Halteeinrichtung (7) aufweist, wobei die Halteeinrichtung (7) an einem ersten Schenkel (11) und die Schalteinrichtung (8) an einem zweiten Schenkel (12) eines um eine Drehachse (S) drehbar an der Halterung (9) gelagerten Wippelements (10) angeordnet sind, wobei die Halteeinrichtung (7) durch den zweiten Schenkel (12) gebildet ist und die beiden Schenkel (11, 12) relativ zueinander unverlagerbar sind, **dadurch gekennzeichnet, dass** der zweite Schenkel (12) in Längsrichtung der Drehachse (S) zu dem ersten Schenkel (11) versetzt angeordnet ist, wobei sich die Schenkel (11, 12) jeweils über einen Abschnitt der Drehachse (S) erstrecken und sich der zweite Schenkel (12) über einen mit dem ersten Schenkel (11) gemeinsamen Abschnitt der Drehachse (S) und auch über einen anderen Abschnitt der Drehachse (S) erstreckt als der erste Schenkel (11) oder der zweite Schenkel (12) sich nicht über einen mit dem ersten Schenkel (11) gemeinsamen Abschnitt der Drehachse (S) erstreckt.

2. Haltevorrichtung (100) nach Anspruch 1, **dadurch gekennzeichnet, dass** die Schenkel (11, 12) zueinander abgewinkelt sind, insbesondere um ca. 90°.

3. Haltevorrichtung (100) nach Anspruch 1 oder 2, **dadurch gekennzeichnet, dass** die Halteeinrichtung (7) eine ebene Haltefläche (13) des zweiten Schenkels (12) zur Kontaktierung der Leitungsführungseinrichtung umfasst.

4. Haltevorrichtung (100) nach einem der Ansprüche 1 bis 3, **dadurch gekennzeichnet, dass** die Schalteinrichtung (8) eine Schaltkante oder eine Schaltfläche (14) zur Kontaktierung der Leitungsführungseinrichtung umfasst, welche am ersten Schenkel (11) vorgesehen ist.

5. Haltevorrichtung (100) nach Anspruch 4, **dadurch gekennzeichnet, dass** die Schaltkante bzw. Schaltfläche (14) schräg zur Drehachse (S) und/oder gekrümmt verläuft, vorzugsweise derart, dass ihr Abstand zur Drehachse (S) in entlang der Drehachse (S) und von der Halteeinrichtung (7) weg weisenden Richtung zunimmt.

6. Haltevorrichtung (100) nach Anspruch 4 oder 5, wobei der erste Schenkel (11) eine Schaltfläche (14) zur Kontaktierung der Leitungsführungseinrichtung umfasst **dadurch gekennzeichnet, dass** die Schaltfläche (14) in sich verdreht ist.

7. Haltevorrichtung (100) nach einem der Ansprüche 1 bis 6, **dadurch gekennzeichnet, dass** das Wippelement (10) mittels einer von der Schalteinrichtung (8) verschiedenen Dreharretierungsvorrichtung (20) dreharretierbar ist und die Dreharretierungsvorrichtung (20) eine Arretierungsfläche (21) umfasst, zur Kontaktierung einer Seitenfläche (22) der Leitungsführungseinrichtung und Einleitung von Arretierungsdruckkräften in diese Seitenfläche (22) und die Arretierungsfläche (21) an dem ersten Schenkel (11) angeordnet ist.

8. Haltevorrichtung (100) nach Anspruch 7, **dadurch gekennzeichnet, dass** die Haltevorrichtung (100) eine Seitenführung (23) für die Leitungsführungseinrichtung aufweist, die einen Gegenhalter (24) zur Einleitung von Arretierungsdruckreaktionskräften in eine Seitenfläche (22) der Leitungsführungseinrichtung umfasst.

9. Haltevorrichtung (100) nach einem der Ansprüche 1 bis 8, **dadurch gekennzeichnet, dass** das Wippelement (10) einen an dem ersten Schenkel (11) angeordneten, relativ zu diesem abgewinkelten Vorsprung (15) mit einem freien Ende (17) und einem dem freien Ende gegenüberliegenden Ende (18) umfasst, der in einem Abstand (A) zumindest im Wesentlichen parallel zu dem zweiten Schenkel (12) verläuft.

10. Haltevorrichtung (100) nach Anspruch 9, **dadurch gekennzeichnet, dass** der Vorsprung (15) von einem Bereich (16) des ersten Schenkels (11) vorspringt, der in Richtung der Drehachse (S) am weitesten von dem zweiten Schenkel (12) entfernten ist und den größten Abstand von der Drehachse (S) aufweist.

11. Haltevorrichtung (100) nach Anspruch 9 oder 10, **dadurch gekennzeichnet, dass** das freie Ende (17) des Vorsprungs (15) weiter von der Halteeinrichtung (7) entfernt ist als sein gegenüberliegendes Ende (18).

12. Haltevorrichtung (100) nach einem der Ansprüche 1 bis 11, **dadurch gekennzeichnet, dass** die Haltevorrichtung (100) eine Einführvorrichtung (25) mit mindestens einer Einführschräge (26) umfasst.

13. Anordnung (200) mit mindestens einer Haltevorrichtung (100) nach einem der Ansprüche 1 bis 12 und einer Leitungsführungseinrichtung, insbesondere einer Energieführungskette (1), die sich zwischen zwei relativ zueinander beweglichen Anschlussstellen (2, 3) erstreckt, und ein mit einer der Anschlussstellen (2) verbindbares Trum (4) und ein mit der anderen Anschlussstelle (3) verbindbares Trum (5) sowie einen die Trume verbindenden Umlenkbogen (6) umfasst, und eine Längserstreckung (19), eine Außenfläche (29), eine Innenfläche (28) und zwei gegenüberliegende Seitenflächen (22) aufweist, **dadurch gekennzeichnet, dass** die Drehachse (S) parallel zur Längserstreckung (19) der Leitungsführungseinrichtung angeordnet ist.

14. Anordnung (200) nach Anspruch 13, **dadurch gekennzeichnet, dass** das Wippelement (10) dreharretierbar ist und die Anordnung (200) so ausgebildet ist, dass bei einer Annäherung der Leitungsführungseinrichtung an die Haltevorrichtung (100) sich die Halteeinrichtung (7) in ihrer ersten Position (P1) befindet und der Umlenkbogen (6) zunächst den zweiten Schenkel (12) des Wippelements (10) passiert bevor er den ersten Schenkel (11) des Wippelements (10) erreicht, und durch Kontakt mit diesem das Wippelement (10) eine die Halteeinrichtung (7) von ihrer ersten Position (P1) in die zweite Position (P2) verlagernde Drehung vollzieht, derart, dass sich der zweite Schenkel (12) an die Innenfläche (28) der Leitungsführungseinrichtung im Bereich eines Trumes (4) anlegt und dieses Trum (4) auf diese Weise hält, und eine Dreharretierung des Wippelements (10) erfolgt und bei einer Annäherung des Umlenkbogens (6) an diese Haltevorrichtung (100) sich das gehaltene Trum (4) zunächst von dem ersten Schenkel (11) wegbewegt, hierdurch die Dreharretierung deaktiviert wird und das Wippelement (10) eine die Halteeinrichtung (7) von ihrer zweiten Position (P2) in die erste Position (P1) verlagernde Drehung vollzieht, bevor der Umlenkbogen (6) den zweiten Schenkel (12) erreicht.

## Claims

1. A holding apparatus (100) for a line guide device, in particular for an energy guide chain (1), which extends between two connection points (2, 3) mobile relative to one another and comprises one run (4) connectable to one of the connection points (2) and one run (5) connectable to the other connection point (3) and a deflection arc (6) connecting the runs,
wherein the holding apparatus (100) has at least one holding device (7), which is displaceable between a first position (P1) and a second position (P2), a switching device (8), which can be used to bring this displacement about,
and a holder (9) for the holding device (7),
wherein the holding device (7) is arranged on a first leg (11) and the switching device (8) is arranged on a second leg (12) of a rocker element (10) mounted rotatably on the holder (9) about an axis of rotation (S), wherein the holding device (7) is formed by the second leg (12) and the two legs (11, 12) are non-displaceable relative to one another, **characterized in that** the second leg (12) is arranged offset relative to the first leg (11) in the longitudinal direction of the axis of rotation (S), wherein the legs (11, 12) each extend over a portion of the axis of rotation (S) and the second leg (12) extends over a portion of the axis of rotation (S) common with the first leg (11) and also over a portion of the axis of rotation (S) different from the first leg (11) or the second leg (12) does not extend over a portion of the axis of rotation (S) common with the first leg (11).

2. The holding apparatus (100) according to Claim 1, **characterized in that** the legs (11, 12) are bent relative to one another, in particular by approximately 90° .

3. The holding apparatus (100) according to Claim 1 or 32 **characterized in that** the holding device (7) comprises a flat holding face (13) of the second leg (12) for contacting the line guide device.

4. The holding apparatus (100) according to one of Claims 1 to 3, **characterized in that** the switching device (8) comprises a switching edge or a switching face (14), provided on the first leg (11), for contacting the line guide device.

5. The holding apparatus (100) according to Claim 4, **characterized in that** the switching edge or switching face (14) extends obliquely to the axis of rotation (S) and/or in curved manner, preferably such that the distance thereof from the axis of rotation (S) increases in the direction pointing along the axis of rotation (S) and away from the holding device (7).

6. The holding apparatus (100) according to Claim 4 or Claim 5, wherein the first leg (11) comprises a switching face (14) for contacting the line guide device, **characterized in that** the switching face (14) is twisted on itself.

7. The holding apparatus (100) according to one of Claims 1 to 6, **characterized in that** the rocker element (10) is rotationally lockable using a rotational locking device (20) which differs from the switching device (8) and the rotational locking device (20) comprises a locking face (21), the locking face (21) being arranged on the first leg (11), for contacting a side face (22) of the line guide device and for introducing locking pressure forces into this side face (22).

8. The holding apparatus (100) according to Claim 7, **characterized in that** the holding apparatus (100) has a side guide (23) for the line guide device, which comprises a counter-holder (24) for introducing locking pressure reactive forces into a side face (22) of the line guide device.

9. The holding apparatus (100) according to one of Claims 1 to 8, **characterized in that** the rocker element (10) comprises a projection (15) arranged on the first leg (11) and bent relative thereto with a free end (17) and an end (18) opposite the free end, which projection extends at least substantially parallel to the second leg (12) at a distance (A) therefrom.

10. The holding apparatus (100) according to Claim 9 **characterized in that** the projection (15) projects from a region (16) of the first leg (11) which is furthest away from the second leg (12) in the direction of the axis of rotation (S) and is at the greatest distance from the axis of rotation (S).

11. The holding apparatus (100) according to Claim 9 or Claim 10, **characterized in that** the free end (17) of the projection (15) is further away from the holding device (7) than its opposite end (18).

12. The holding apparatus (100) according to one of Claims 1 to 11, **characterized in that** the holding apparatus (100) comprises an insertion device (25) with at least one insertion bevel (26).

13. An arrangement (200) with at least one holding apparatus (100) according to one of Claims 1 to 12 and a line guide device, in particular an energy guide chain (1), which extends between two connection points (2, 3) mobile relative to one another and comprises one run (4) connectable to one of the connection points (2) and one run (5) connectable to the other connection point (3) and a deflection arc (6) connecting the runs, and a longitudinal extent (19), an outer face (29), an inner face (28) and two opposing side faces (22), **characterized in that** the axis of rotation (S) is arranged parallel to the longitudinal extent (19) of the line guide device.

14. The arrangement (200) according to Claim 13, **characterized in that** the rocker element (10) is rotationally lockable and the arrangement (200) is configured such that, when the line guide device approaches the holding apparatus (100), the holding device (7) is located in its first position (P1) and the deflection arc (6) firstly passes the second leg (12) of the rocker element (10) before reaching the first leg (11) of the rocker element (10) and, through contact therewith, the rocker element (10) effects a rotation displacing the holding device (7) from its first position (P1) into the second position (P2), such that the second leg (12) positions itself against the inner face (28) of the line guide device in the region of one run (4) and holds this run (4) in this manner, and the rocker element (10) is rotationally locked and, when the deflection arc (6) approaches this holding apparatus (100), the held run (4) initially moves away from the first leg (11), the rotational locking hereby being disabled, and the rocker element (10) effects a rotation displacing the holding device (7) from its second position (P2) into the first position (P1) before the deflection arc (6) reaches the second leg (12).

## Revendications

1. Dispositif de retenue (100) pour un dispositif de guidage de câble, en particulier pour une chaîne porte-câbles (1) qui s'étend entre deux points de raccordement (2, 3) mobiles l'un par rapport à l'autre et qui comprend un brin (4) pouvant être relié à l'un des points de raccordement (2) et un brin (5) pouvant être relié à l'autre point de raccordement (3) et un coude de renvoi (6) reliant les brins, dans lequel le dispositif de retenue (100) comporte au moins un moyen de retenue (7) pouvant être déplacé entre une première position (P1) et une deuxième position (P2),
un dispositif de commutation (8) au moyen duquel ce déplacement peut être effectué,
et un support (9) pour le moyen de retenue (7), le moyen de retenue (7) étant monté sur une première branche (11) et le dispositif de commutation (8) sur une deuxième branche (12) d'un élément basculant (10) monté de manière rotative autour d'un axe de rotation (S) sur le support (9), le moyen de retenue (7) étant formé par la deuxième branche (12) et les deux branches (11, 12) ne peuvent pas se déplacer l'une par rapport à l'autre, **caractérisé en ce que** la deuxième branche (12) est décalée par rapport à la première branche (11) dans la direction longitudinale de l'axe de rotation (S), les branches (11, 12) s'étendant chacune sur une partie de l'axe de rotation
(S) et la deuxième branche (12) s'étendant sur une partie de l'axe de rotation (S) commune à la première branche (11) et également sur une autre partie de l'axe de rotation (S) que la première branche (11) ou la deuxième branche (12) ne s'étend pas sur une partie de l'axe de rotation (S) commune à la première branche (11).

2. Dispositif de retenue (100) selon la revendication 1, **caractérisé en ce que** les branches (11, 12) sont coudées l'une par rapport à l'autre, en particulier d'environ 90°.

3. Dispositif de retenue (100) selon la revendication 1 ou 2, **caractérisé en ce que** le moyen de retenue (7) comprend une surface de retenue plane (13) de la deuxième branche (12) pour entrer en contact avec le dispositif de guidage de câble.

4. Dispositif de retenue (100) selon l'une quelconque des revendications 1 à 3, **caractérisé en ce que** le dispositif de commutation (8) comprend un bord de commutation ou une surface de commutation (14) pour entrer en contact avec le dispositif de guidage de câble, qui est prévu sur la première branche (11).

5. Dispositif de retenue (100) selon la revendication 4, **caractérisé en ce que** le bord ou la surface de commutation (14) s'étend de manière oblique par rapport à l'axe de rotation (S) et/ou de manière courbée, de préférence de telle sorte que sa distance par rapport à l'axe de rotation (S) augmente dans la direction s'éloignant de l'axe de rotation (S) et du moyen de retenue (7).

6. Dispositif de retenue (100) selon la revendication 4 ou 5, dans lequel la première branche (11) comprend une surface de commutation (14) pour entrer en contact avec le dispositif de guidage de câble, **caractérisé en ce que** la surface de commutation (14) est tordue sur elle-même.

7. Dispositif de retenue (100) selon l'une quelconque des revendications 1 à 6, **caractérisé en ce que** l'élément basculant (10) peut être bloqué en rotation au moyen d'un dispositif de verrouillage en rotation (20) différent du dispositif de commutation (8) et **en ce que** le dispositif de verrouillage en rotation (20) comprend une surface de verrouillage (21) destinée à entrer en contact avec une surface latérale (22) du dispositif de guidage de câble et à exercer des forces de verrouillage sur cette surface latérale (22), et la surface de verrouillage (21) est disposée sur la première branche (11).

8. Dispositif de retenue (100) selon la revendication 7, **caractérisé en ce que** le dispositif de retenue (100) comporte un guide latéral (23) pour le dispositif de guidage de câble, qui comprend un contre-support (24) pour exercer des forces de réaction de pression de verrouillage sur une surface latérale (22) du dispositif de guidage de câble.

9. Dispositif de retenue (100) selon l'une quelconque des revendications 1 à 8, **caractérisé en ce que** l'élément basculant (10) comprend une saillie (15) disposée sur la première branche (11), inclinée par rapport à celle-ci, avec une extrémité libre (17) et une extrémité (18) opposée à l'extrémité libre, qui s'étend à une distance (A) au moins sensiblement parallèle à la deuxième branche (12).

10. Dispositif de retenue (100) selon la revendication 9, **caractérisé en ce que** la saillie (15) fait saillie à partir d'une zone (16) de la première branche (11) qui est la plus éloignée de la deuxième branche (12) dans la direction de l'axe de rotation (S) et qui présente la plus grande distance par rapport à l'axe de rotation (S).

11. Dispositif de retenue (100) selon la revendication 9 ou 10, **caractérisé en ce que** l'extrémité libre (17) de la saillie (15) est plus éloignée du moyen de retenue (7) que son extrémité opposée (18).

12. Dispositif de retenue (100) selon l'une quelconque des revendications 1 à 11, **caractérisé en ce que** le dispositif de retenue (100) comprend un dispositif d'introduction (25) avec au moins un biseau d'introduction (26).

13. Agencement (200) comprenant au moins un dispositif de retenue (100) selon l'une quelconque des revendications 1 à 12 et un dispositif de guidage de câble, en particulier une chaîne porte-câbles (1) qui s'étend entre deux points de raccordement (2, 3) mobiles l'un par rapport à l'autre, et un brin (4) pouvant être relié à l'un des points de raccordement (2) et un brin (5) pouvant être relié à l'autre point de raccordement (3) ainsi qu'un coude de renvoi (6) reliant les brins, et présente une extension longitudinale (19), une surface extérieure (29), une surface intérieure (28) et deux surfaces latérales opposées (22), **caractérisé en ce que** l'axe de rotation (S) est disposé parallèlement à l'extension longitudinale (19) du dispositif de guidage de câble.

14. Agencement (200) selon la revendication 13, **caractérisé en ce que** l'élément basculant (10) peut être verrouillé en rotation et le dispositif (200) est conçu de telle sorte que, lorsque le dispositif de guidage de câble s'approche du dispositif de retenue (100), le moyen de retenue (7) se trouve dans sa première position (P1) et que le coude de renvoi (6) passe d'abord devant la deuxième branche (12) de l'élément basculant (10) avant d'atteindre la première branche (11) de l'élément basculant (10), et, par contact avec celui-ci, l'élément basculant (10) effectue une rotation déplaçant le moyen de retenue (7) de sa première position (P1) vers la deuxième position (P2), de telle sorte que la deuxième branche (12) s'appuie contre la surface intérieure (28) du dispositif de guidage de câble dans la zone d'un brin (4) et maintient ainsi ce brin (4) de cette manière, et un verrouillage en rotation de l'élément basculant (10) s'effectue et, lorsque le coude de renvoi (6) s'approche de ce dispositif de retenue (100), le brin (4) retenu s'éloigne d'abord de la première branche (11), ce qui désactive le verrouillage en rotation et l'élément basculant (10) effectue une rotation déplaçant le moyen de retenue (7) de sa deuxième position (P2) vers la première position (P1) avant que le coude de renvoi (6) n'atteigne la deuxième branche (12).
